(19)

Europäisches
Patentamt
European
Patent Office
Office européen
des brevets

(11) **EP 4 465 681 A1**

(12) **EUROPEAN PATENT APPLICATION**

(43) Date of publication:
**20.11.2024 Bulletin 2024/47**

(21) Application number: **24170830.4**

(22) Date of filing: **17.04.2024**

(51) International Patent Classification (IPC):
***H04W 24/02*** (2009.01)   ***H04W 24/10*** (2009.01)

(52) Cooperative Patent Classification (CPC):
**H04W 24/10; H04W 24/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 FI 20235546**

(71) Applicant: **Nokia Technologies Oy
02610 Espoo (FI)**

(72) Inventors:
• **SONG, Jian
Palaiseau (FR)**

• **LASELVA, Daniela
Klarup (DK)**
• **MASRI, Ahmad
Tampere (FI)**
• **VEIJALAINEN, Teemu Mikael
Helsinki (FI)**
• **HÖHNE, Hans Thomas
Helsinki (FI)**
• **ALI, Amaanat
Espoo (FI)**

(74) Representative: **Nokia EPO representatives
Nokia Technologies Oy
Karakaari 7
02610 Espoo (FI)**

(54) **USING MACHINE LEARNING FOR DETERMINING RELAXATION OF MEASUREMENTS PERFORMED BY A USER EQUIPMENT**

(57)     Disclosed is a method comprising providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning -based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

EP 4 465 681 A1

410 | Legacy RRC configuration of relaxation of measurements transmitted by an access node to a UE

420 | UE requests ML related configuration for measurement relaxation from the access node.

430 | The access node transmits feedback and determines to switch between the legacy RRC configuration and the ML related configuration:

Option 1) UE suspends the legacy configuration for relaxation of measurements and uses ML related configuration. — 432

Option 2) UE monitors the legacy configuration for relaxation of measurements using pre-determined criteria and conditions — 434

Option 3) UE dynamically switches between the legacy configuration and ML related configuration for relaxation of measurements. — 436

FIG. 4

## Description

## Field

The following exemplary embodiments relate to wireless communication and determining how a user equipment is to perform measurements.

## Background

In cellular communication, efficient usage of power is an important aspect for a user equipment (UE). One aspect that has potential for power saving in a UE is how often the UE is to perform measurement relating to the network. For example, the UE may perform measurements such as radio link monitoring (RLM) and beam failure detection (BFD) measurements in the radio resource control (RRC) connected state. Thus, relaxation of the measurements, in other words allowing the UE to perform such measurements less often when it is determined that the conditions in the cellular communication network allow that, may help to reduce power consumption. For example, the UE may be allowed to relax radio measurements such as reference signal received power (RSRP) and reference signal received quality (RSRQ), leveraging the discontinuous reception (DRX) operations. Hence, the measurements of the radio quality of the serving cell(s) and neighbor cells may not need to be performed continuously, but measurement samples may be taken for example one time per DRX cycle, thus saving UE power. In addition, further relaxation of the radio resource management (RRM) measurements of neighbor cells may also be defined in for UEs in RRC idle/inactive. The UE may be allowed to omit these RRM measurements if it is deemed to be in low mobility, or at the cell center, or a combination of both.

## Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: receiving, from an access node, a first configuration that is part of a radio resource control configuration for relaxation of measurements, wherein the first configuration comprises legacy hardcoded rules and measurement relaxation parameters for executing a legacy measurement relaxation procedure, requesting, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtaining, from the machine learning model, a prediction model regarding the machine learning -based measurement relaxation procedure in accordance with the second configuration, determining measurement relaxation parameters based on the prediction model, monitoring one or more machine learning -based measurement relaxation conditions, determining that the prediction results and the monitored one or more conditions indicate that machine learning -based measurement relaxation can be applied, and transmitting, to the access node, an indication that the status of the measurement relaxation corresponds to enter.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, to cause the apparatus at least to: receive, from an access node, a first configuration that is part of a radio resource control configuration for relaxation of measurements, wherein the first configuration comprises legacy hardcoded rules and measurement relaxation parameters for executing a legacy measurement relaxation procedure, request, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtain, from the machine learning model, a prediction model regarding the machine learning -based measurement relaxation procedure in accordance with the second configuration, determine measurement relaxation parameters based on the prediction model, monitor one or more machine learning -based measurement relaxation conditions, determine that the prediction results and the monitored one or more conditions indicate that machine learning -based measurement relaxation can be applied, and transmit, to the access node, an indication that the status of the measurement relaxation corresponds to enter.

According to a third aspect there is provided a method comprising: receiving, from an access node, a first configuration that is part of a radio resource control configuration for relaxation of measurements, wherein the first configuration comprises legacy hardcoded rules and measurement relaxation parameters for executing a legacy measurement relaxation procedure, requesting, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtaining, from the machine learning model, a prediction model regarding the machine learning -based measurement relaxation procedure in accordance with the second configuration, determining measurement relaxation parameters based on the prediction model, monitoring one or more machine learning -based measurement relaxation conditions, determining that the prediction results and the monitored one or more conditions indicate that machine learning -based measurement relaxation can be applied, and transmitting, to the access node, an indication that the status of the measurement relaxation corresponds to enter.

In some example embodiment according to the third aspect the method is a computer implemented method.

According to a fourth aspect there is provided a computer program comprising instructions which, when executed by an apparatus, cause the apparatus to perform at least the following: receive, from an access node, a first configuration that is part of a radio resource control configuration for relaxation of measurements, wherein the first configuration comprises legacy hardcoded rules and measurement relaxation parameters for executing a legacy measurement relaxation procedure, request, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtain, from the machine learning model, a prediction model regarding the machine learning -based measurement relaxation procedure in accordance with the second configuration, determine measurement relaxation parameters based on the prediction model, monitor one or more machine learning -based measurement relaxation conditions, determine that the prediction results and the monitored one or more conditions indicate that machine learning - based measurement relaxation can be applied, and transmit, to the access node, an indication that the status of the measurement relaxation corresponds to enter.

According to a fifth aspect there is provided a computer program comprising instructions stored thereon for performing at least the following: receiving, from an access node, a first configuration that is part of a radio resource control configuration for relaxation of measurements, wherein the first configuration comprises legacy hardcoded rules and measurement relaxation parameters for executing a legacy measurement relaxation procedure, requesting, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtaining, from the machine learning model, a prediction model regarding the machine learning -based measurement relaxation procedure in accordance with the second configuration, determining measurement relaxation parameters based on the prediction model, monitoring one or more machine learning -based measurement relaxation conditions, determining that the prediction results and the monitored one or more conditions indicate that machine learning - based measurement relaxation can be applied, and transmitting, to the access node, an indication that the status of the measurement relaxation corresponds to enter.

According to a sixth aspect there is provided a non-transitory computer readable medium comprising program instructions that, when executed by an apparatus, cause the apparatus to perform at least the following: receive, from an access node, a first configuration that is part of a radio resource control configuration for relaxation of measurements, wherein the first configuration comprises legacy hardcoded rules and measurement relaxation parameters for executing a legacy measurement relaxation procedure, request, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtain, from the machine learning model, a prediction model regarding the machine learning -based measurement relaxation procedure in accordance with the second configuration, determine measurement relaxation parameters based on the prediction model, monitor one or more machine learning -based measurement relaxation conditions, determine that the prediction results and the monitored one or more conditions indicate that machine learning -based measurement relaxation can be applied, and transmit, to the access node, an indication that the status of the measurement relaxation corresponds to enter.

According to a seventh aspect there is provided a non-transitory computer readable medium comprising program instructions stored thereon for performing at least the following: receiving, from an access node, a first configuration that is part of a radio resource control configuration for relaxation of measurements, wherein the first configuration comprises legacy hardcoded rules and measurement relaxation parameters for executing a legacy measurement relaxation procedure, requesting, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtaining, from the machine learning model, a prediction model regarding the machine learning -based measurement relaxation procedure in accordance with the second configuration, determining measurement relaxation parameters based on the prediction model, monitoring one or more machine learning -based measurement relaxation conditions, determining that the prediction results and the monitored one or more conditions indicate that machine learning -based measurement relaxation can be applied, and transmitting, to the access node, an indication that the status of the measurement relaxation corresponds to enter.

According to an eighth aspect there is provided a computer readable medium comprising program instructions that, when executed by an apparatus, cause the apparatus to perform at least the following: receive, from an access node, a first configuration that is part of a radio resource control configuration for relaxation of measurements, wherein the first configuration comprises legacy hardcoded rules and measurement relaxation parameters for executing a legacy measurement relaxation procedure, request, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtain, from the machine learning model, a prediction model regarding the machine learning -based measurement relaxation procedure in accordance with the second configuration, determine measurement relaxation parameters based on the prediction model, monitor one or more machine learning -based measurement relaxation conditions, determine that the prediction results and the monitored one or more conditions indicate that machine learning -based measurement relaxation can be applied, and transmit, to the access node, an indication that the status of the measurement relaxation corresponds to enter.

According to a ninth aspect there is provided a computer readable medium comprising program instructions stored thereon for performing at least the following: receiving, from an access node, a first configuration that is part of a radio resource control configuration for relaxation of measurements, wherein the first configuration comprises legacy hardcoded rules and measurement relaxation parameters for executing a legacy measurement relaxation procedure, requesting, from the access node, a second configuration that is for executing a machine learning -based measurement relaxation procedure, receive, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, obtaining, from the machine learning model, a prediction model regarding the machine learning -based measurement relaxation procedure in accordance with the second configuration, determining measurement relaxation parameters based on the prediction model, monitoring one or more machine learning -based measurement relaxation conditions, determining that the prediction results and the monitored one or more conditions indicate that machine learning -based measurement relaxation can be applied, and transmitting, to the access node, an indication that the status of the measurement relaxation corresponds to enter.

According to a tenth aspect there is provided an apparatus comprising means for performing: providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning -based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

In some example embodiments according to the tenth aspect, the means comprises at least one processor, and at least one memory storing instructions that, when executed by the at least one processor, to cause the performance of the apparatus.

According to an eleventh aspect there is provided an apparatus comprising at least one processor, and at least one memory storing instructions that, when executed by the at least one processor, to cause the apparatus at least to: provide, to a user equipment, a first configuration that is part of a radio resource control configuration for relaxation measurements, wherein the first configuration comprises legacy hardcoded rules and measurement relaxation parameters for executing a legacy measurement relaxation procedure, receive a request, from the user equipment, for a second configuration that is for executing a machine learning -based measurement relaxation procedure, provide, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receive, from the user equipment, an indication that the status of the measurement relaxation corresponds to enter.

According to a twelfth aspect there is provided a method comprising: providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning - based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

In some example embodiment according to the twelfth aspect the method is a computer implemented method.

According to a thirteenth aspect there is provided a computer program comprising instructions which, when executed by an apparatus, cause the apparatus to perform at least the following: provide, to a user equipment, a first configuration that is part of a radio resource control configuration for relaxation measurements, wherein the first configuration comprises legacy hardcoded rules and measurement relaxation parameters for executing a legacy measurement relaxation procedure, receive a request, from the user equipment, for a second configuration that is for executing a machine learning -based measurement relaxation procedure, provide, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receive, from the user equipment, an indication that the status of the measurement relaxation corresponds to enter.

According to a fourteenth aspect there is provided a computer program comprising instructions stored thereon for performing at least the following: providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning -based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

According to a fifteenth aspect there is provided a non-transitory computer readable medium comprising program instructions that, when executed by an apparatus, cause the apparatus to perform at least the following: provide, to a user equipment, a first configuration that is part of a radio resource control configuration for relaxation measurements, wherein the first configuration comprises legacy hardcoded rules and measurement relaxation parameters for executing a legacy measurement relaxation procedure, receive a request, from the user equipment, for a second configuration that is for executing a machine learning -based measurement relaxation procedure, provide, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receive, from the user equipment, an indication that the status of the measurement relaxation corresponds to enter.

According to a sixteenth aspect there is provided a non-transitory computer readable medium comprising program instructions stored thereon for performing at least the following: providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning -based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

According to a seventeenth aspect there is provided a computer readable medium comprising program instructions that, when executed by an apparatus, cause the apparatus to perform at least the following: provide, to a user equipment, a first configuration that is part of a radio resource control configuration for relaxation measurements, wherein the first configuration comprises legacy hardcoded rules and measurement relaxation parameters for executing a legacy measurement relaxation procedure, receive a request, from the user equipment, for a second configuration that is for executing a machine learning -based measurement relaxation procedure, provide, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receive, from the user equipment, an indication that the status of the measurement relaxation corresponds to enter.

According to an eighteenth aspect there is provided a computer readable medium comprising program instructions stored thereon for performing at least the following: providing, to a user equipment, a first configuration that is part of a radio resource control configuration for relaxation measurements, wherein the first configuration comprises legacy hardcoded rules and measurement relaxation parameters for executing a legacy measurement relaxation procedure, receiving a request, from the user equipment, for a second configuration that is for executing a machine learning -based measurement relaxation procedure, providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation, receiving, from the user equipment, an indication that the status of the measurement relaxation corresponds to enter.

## List of Drawings

In the following, the invention will be described in greater detail with reference to the embodiments and the accompanying drawings, in which

FIG. 1 illustrates an example embodiment of a radio access network.
FIG. 2 illustrates a signaling chart of an example embodiment of L1/L2-Triggered Mobility.
FIG. 3A and FIG. 3B illustrate system-level simulation results.
FIG. 4 illustrates a block diagram according to an example embodiment in which a configuration for measurement relaxation is used at least partly based on machine learning.
FIG. 5A and FIG. 5B are example embodiments that illustrate a signalling charts according to example implementation options.
FIG. 6 illustrates an example embodiment of a machine learning -based model used for performing a sequence, or window, of output in the future time domain.
FIG. 7 and FIG. 8 illustrate example embodiments of an apparatus.

## Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Universal Mobile Telecommunication System (UMTS, 3G) based on basic wideband-code division multiple access (W-CDMA), highspeed packet access (HSPA), Long Term Evolution (LTE), LTE-Advanced, a fifth generation (5G) mobile or cellular communication system, 5G-Advanced and/or 6G. The embodiments are not, however, restricted to the systems given as an example but a person skilled in the art may apply the solution to other communication systems provided with necessary properties.

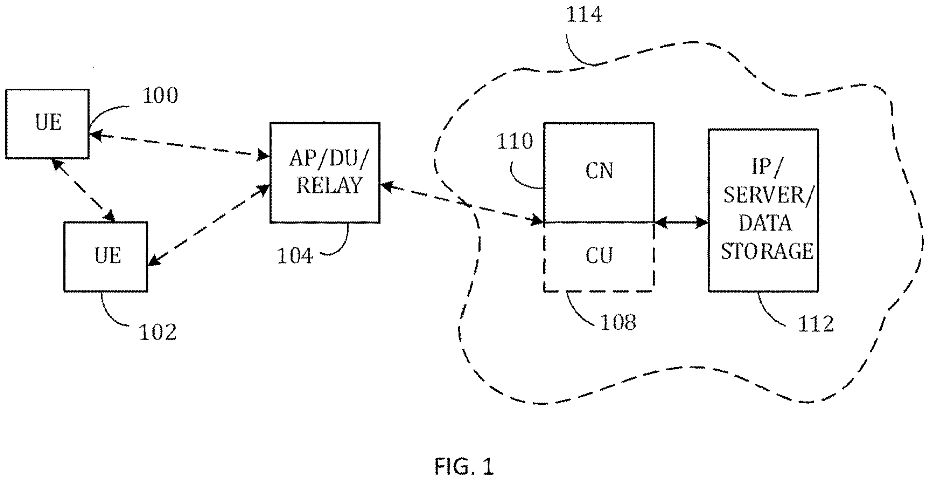

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an example embodiment of a radio access network.

FIG. 1 shows terminal devices 100 and 102 configured to be in a wireless connection on one or more communication channels in a cell with an access node (such as (e/g)NodeB) 104 providing the cell. The terminal devices 100 and 102 may also be called as mobile device, or user equipment (UE), or user terminal, user device, etc. The access node 104 may also be referred to as a node, or a base station, or any other type of interfacing device including a relay station capable of operating in a wireless environment. The physical link from a terminal device to a (e/g)NodeB is called uplink (UL) or reverse link and the physical link from the (e/g)NodeB to the terminal device is called downlink (DL) or forward link. It should be appreciated that (e/g)NodeBs or their functionalities may be implemented by using any access node, host, server or access point etc. entity suitable for such a usage. It is to be noted that although one cell is discussed in this exemplary embodiment, for the sake of simplicity of explanation, multiple cells may be provided by one access node in some example embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices to external packet data networks, or mobile management entity (MME), etc.

The user equipment (UE) illustrates one type of an apparatus to which resources on the air interface are allocated and assigned, and thus any feature described herein with a UE may be implemented with a corresponding apparatus, such as a relay node. An example of such a relay node is a layer 3 relay (self-backhauling relay) towards the base station. Another example of such a relay node is a layer 2 relay. Such a relay node may comprise a UE part and a Distributed Unit (DU) part. A CU (centralized unit) may coordinate the DU operation via F1AP -interface for example.

The UE may refer to a portable computing device that includes wireless mobile communication devices operating with or without a subscriber identification module (SIM), or an embedded SIM, eSIM. A UE may also be a device having capability to operate in Internet of Things (IoT) network which is a scenario in which objects are provided with the ability to transfer data over a network without requiring human-to-human or human-to-computer interaction. The UE may also utilise cloud computing. The UE (or in some embodiments a layer 3 relay node) is configured to perform one or more of user equipment functionalities. It is to be noted that the UE may also be a vehicle or a household appliance capable of using cellular communication.

Additionally, although the apparatuses have been depicted as single entities, different units, processors and/or memory units (not all shown in FIG. 1) may be implemented.

5G enables using multiple input- multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented as a system, where macro coverage is provided by the LTE and 5G radio interface access comes from small cells by aggregation to the LTE. In other words, 5G is may support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

It is to be noted that the depicted system is an example of a part of a radio access system and the system may comprise a plurality of (e/g)NodeBs, UEs may have access to a plurality of radio cells and the system may comprise also other apparatuses, such as physical layer relay nodes or other network elements, etc. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In

**EP 4 465 681 A1**

some exemplary embodiments, in multilayer networks, one access node provides one kind of a cell or cells, and thus a plurality of (e/g)NodeBs are required to provide such a network structure.

As mentioned previously, it is an important aspect that power consumption of a UE can be reduced and one way to reduce power consumption is relaxation of measurements the UE is expected to perform. Relaxation may be understood as reducing the amount of measurements performed, or reducing the frequency at which measurements are performed, or a combination of both. The measurements may be performed with respect to the network by the UE. Such relaxation may be related for example to requirements of performing measurements related to Radio Link Monitoring (RLM), Beam Failure Detection (BFD) and Beam-level mobility (LTM) procedures. The UE performs RLM procedure to ensure an acceptable quality of connection between the UE and an access node such as a gNB. The UE performs BFD procedure to ensure an acceptable quality of beam used for connection between UE and the access node, and the UE performs Beam-level mobility (LTM), also called the L1/L2 Triggered Mobility, to handover to a beam of neighbouring cell with better quality. It is to be noted that the LTM is L1/L2 procedure.

The UE may be configured to measure reference signals, such as at least one of a synchronization signal block (SSB), or channel state information reference signal (CSI-RS) once per DRX cycle. However, if the UE is in favourable conditions, relaxation for the measurements may be allowed. Favourable conditions may be understood to be for example one or more of the following: the UE is in an area of good coverage e.g., near the center of cell, the UE is in state of low mobility, or the UE is configured with either Short DRX cycle or Short DRX cycle length of Long DRX cycle. It is to be noted that the DRX cycle length may be set by the network based on the traffic and quality of service (QoS) demands and it may be as short as for example 10 ms. Because of the short DRX cycle length, the UE would measure the quality of the radio channel frequently (e.g. about every 10 ms) irrespective of the quality level and of if there is data or not. However, the UE would not detect out-of-sync (OOS) if in good radio conditions and thus relaxation of measurements may provide UE power saving gain with a minimum risk for delayed detection of link or beam failures and for late trigger of the associated recovery procedures. Reduced power consumption for RLM and BFD measurements may be achieved for example by extending the RLM and BFD evaluation period, or by decreasing the number of samples taken during a regular period with a relaxation scaling factor $K$.

The UE also performs measurements that relate to mobility, that may be understood as cell-level mobility or beam-level mobility. To reduce the power consumption, it would be beneficial to be able to reduce power consumption that relates to the measurements that are regarding mobility. The cell-level mobility is based on RRC procedures and determines the need for cell change. In the RRC Connected state, the UE may be expected to continuously monitor the serving cell to evaluate whether the downlink (DL) radio link quality is sufficiently good, ensuring that the radio link can be kept and data transfer can be performed. This procedure is referred to as radio link monitoring (RLM). Also, the reference signals used for RLM can be either SSBs or CSI-RSs, and their radio link quality is estimated over an evaluation period.

For UEs in the RRC Connected state, beam-level mobility (i.e. medium access control (MAC) -based access node beam management) is controlled by the network, which selects the Receive (Rx) serving beam of the UE. Aided by L1 RSRP measurement reporting of the beam quality, the procedure allows the serving cell to keep track of the beam used by the UE for data reception. The UE may be configured to perform the measurements using either the SSBs or CSI-RSs. Moreover, the UE also has to perform the BFD procedure to ensure that certain monitored Rx beams have a good enough quality and, in turn, the beam tracking will not fail.

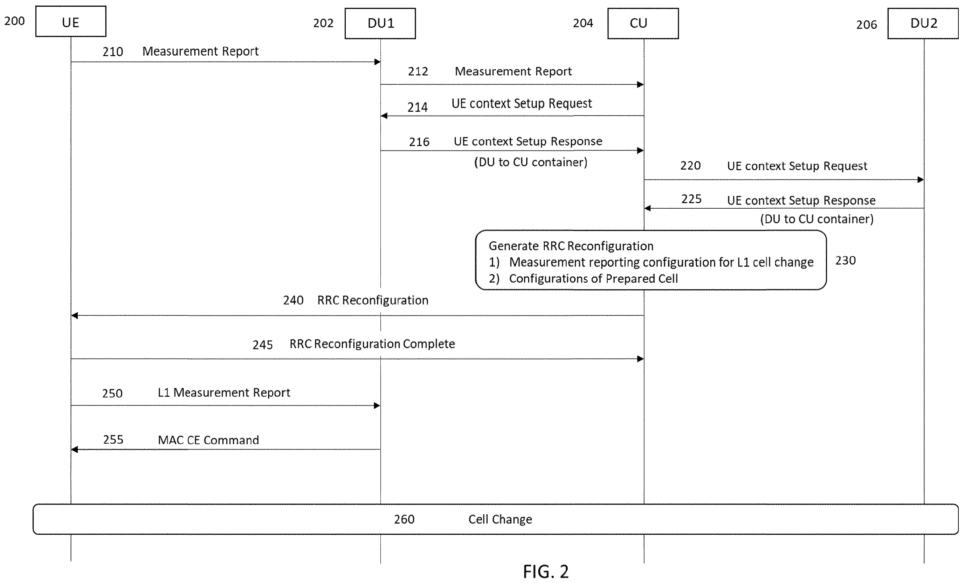

An example of beam-level mobility is a mechanism of L1/L2-Triggered Mobility (LTM). LTM differs from L3 mobility procedures where the handover between two cells is decided by RRC layer, as with LTM the handover is performed by the MAC layer terminated in the Distributed Unit (DU). FIG. 2 illustrates a signaling chart of an example embodiment of the LTM. In this example embodiment, the signaling occurs between a UE 200, a first DU 202, a CU 204 and a second DU 206. This example embodiment illustrates the LTM from a serving cell in the first DU 202 to a target cell in the second DU 206, which corresponds to an inter-DU intra-CU scenario. The same diagram would apply as well in case of intra-DU intra-CU cell change in which the first DU 202 would be the same as the second DU 206. In this example embodiment, there is a preparation phase in which the LTM is performed between the signaling 210 and 245. First, the UE 200 transmits measurement report 210 to the first DU 202, which then transmits the measurement report 212 to the CU 204. The CU 204 then transmits a UE context setup request 214 to the first DU 202, which then responds by transmitting a UE context setup response 216. It is to be noted that the UE context setup response is transmitted from a DU to CU container.

Next, the CU 204 transmits a UE context setup request 220 to the second DU 206, which in response transmits a UE context setup response 225. After this, the CU 204 performs step 230 that generates an RRC reconfiguration that comprises determining a configuration for reporting measurements for L1 cell change and determining configurations of a prepared cell. The CU 204 then transmits RRC reconfiguration signaling 240 to the UE 200, which then responds by transmitting RRC reconfiguration complete signaling 245. In other words, the network determines to configure potential target cells for LTM based on measurement report received from the UE 200.

The UE 200 then starts to report periodically the L1 beam measurements of serving and candidate target cells as illustrated in signaling 250. Upon determining that there is a target candidate cell having a better radio link beam measurement than the serving cell, e.g., L1-RSRP of target beam measurement > L1-RSRP of serving beam measurement + Off for e.g., Time -to-Trigger (TTT) time, the serving cell, that is provided by the first DU 202, transmits a MAC Control Element (MAC CE) command 255, or a L1 message, to trigger the cell change to the target candidate cell. The handover from serving cell to target cell, in other words the cell change 260, is performed by the UE. The LTM may have a benefit that, compared to a baseline handover and a conditional handover, the interruption during the handover execution may be reduced substantially as the UE does not need to perform higher layer (RRC, PDCP) reconfiguration and the UE may in some examples connect to the target cell without a random access procedure, in other words, the UE may perform RACHless to connect the target cell.

In some radio mobility scenarios such as cell-level mobility, the UE may reach a stationary status with good serving cell, or beam quality, or a combination or both, in a certain time period, where the stationary, or semi-stationary, condition is suitable to apply relaxation of measurements and thus achieve the power saving gain for the UE. Yet, the conditions for entering and exiting a status corresponding to relaxation of measurements may rely on several thresholds, which may be fixed, and which the network may configure. This may result in non-accurate decisions about when to enter and/or exit the measurement relaxation mode. For example, the heuristic signal interference and noise (SINR) or reference signal received power (RSRP) level and variation thresholds may be difficult to define for targeted mobility performance (i.e. radio link failure (RLF), beam failure (BF), handover failure (HOF)) in different scenarios. Further, the relaxation may be stopped whenever the UE is in a defined low cell quality and high mobility, which may be unnecessary for example if future insights are predictable.

Also, the measurement relaxation scaling factor may be hardcoded (i.e. fixed and common to any UEs, and not scalable with the changing radio environment). Therefore, it may not be determined by a closed loop algorithm defining a policy, and therefore may not characterize the radio condition and mobility key performance indictors (KPIs), which may depend on a UE specific receiver performance. Further, radio quality inaccuracy and mobility KPIs deterioration may be caused by errors is measurement estimation when relaxation mode configuration parameters are not configured optimally.

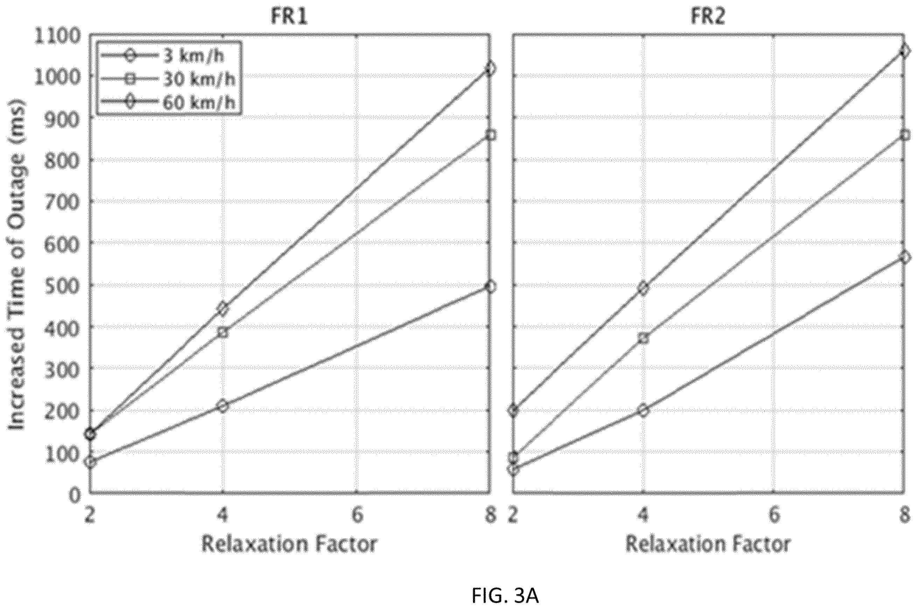

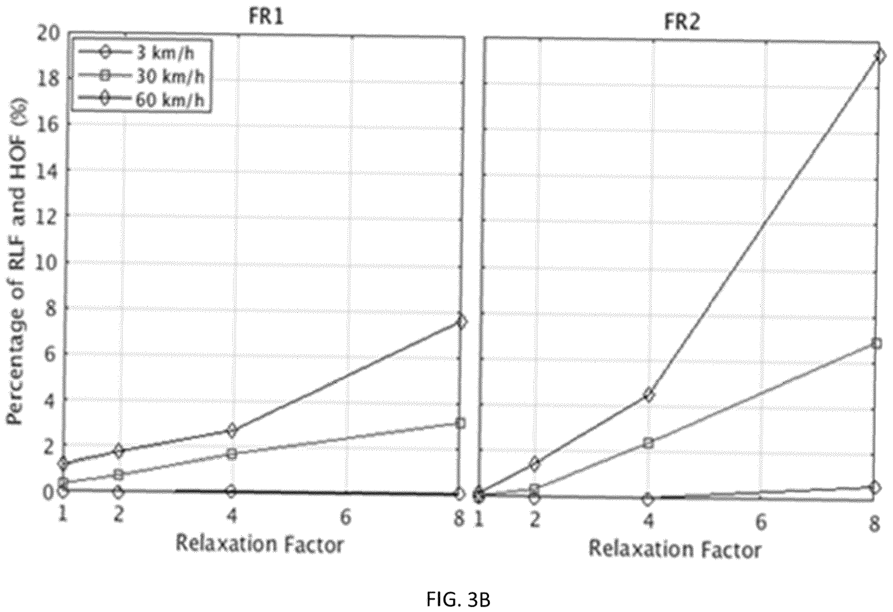

To further highlight the above described issues regarding the relaxation feature, FIG. 3A and FIG. 3B illustrate system-level simulation results that account for mobility related KPIs vs different values of the relaxation scaling factor K under operation of both FR1 (FR1<6GHz) and FR2 (FR2>6GHz). Based on these simulation results, it can be concluded that without robust relaxation mechanism, the mobility performance in terms of Time of Outage and percentage of HOF, RLF may be affected. In the simulation results of FIG. 3A it can be observed that the Time of Outage (ToO) increases with the scaling K, and in turn a longer outage time may degrade or compromise the UE QoS if data is present. Also, relaxing the measurement period may result in delayed detection of Out Of Sync (OOS), RLF, and in a need for cell or beam change. This, in turn, may make the UE stay longer in poor radio link conditions or delay triggering radio link recovery. It is also to be noted that the ToO is increased up to twice as higher at the UE speed of 60 km/h than at 3 km/h as the UE suffers from faster SINR variation and reduced measurement accuracy at higher speed.

In the simulation results of FIG. 3B, it may be observed that when applying measurements relaxation (K > 1), the percentage of failures stays below 1% at 3 km/h under any relaxation scaling K. This confirms that at low UE speeds, the UE can track the radio quality accurately even when relaxing the measurement periods with K. However, the failures increase up to 8% in FR1 and 19% in FR2 at 60 km/h. Given the delays in detecting the relative fast degradation of beam and cell quality, the UE stays longer in poor radio link conditions at higher speeds, which increases the probability of RLF and HOF.

Thus, it would be beneficial to have a framework that allows relaxation of measurements such as those relating to mobility and RRM. Machine learning (ML) may be utilized to allow a UE to perform proactive measurement relaxation in RRC connected mode to achieve a higher power saving gain, while not causing impairment in terms of mobility performance. For example, an access node such as a gNB, may control, and thereby enable, disable and switch between the hardcoded rules, that may be referred to as legacy rules, or legacy configuration for measurement relaxation, and ML-based configurations for measurement relaxation at the UE.

For example, the access node may transmit ML-based measurement relaxation configuration to the UE. Measurements may be for example those related to mobility, such as RLM or BFM, and RRM related measurements. Configuration for relaxation of the measurements may be such that the UE may suspend the legacy hardcoded relaxation rules by executing ML-based solutions. Alternatively, the UE may monitor and alter the legacy hardcoded relaxation rules with aid of the ML-based configurations. Thus, the UE may use, at least partly, ML-based configurations for deploying a configuration for relaxation of measurements. Additionally, the UE may dynamically switch back to the legacy hardcoded relaxation rules based on for example predefined constraints.

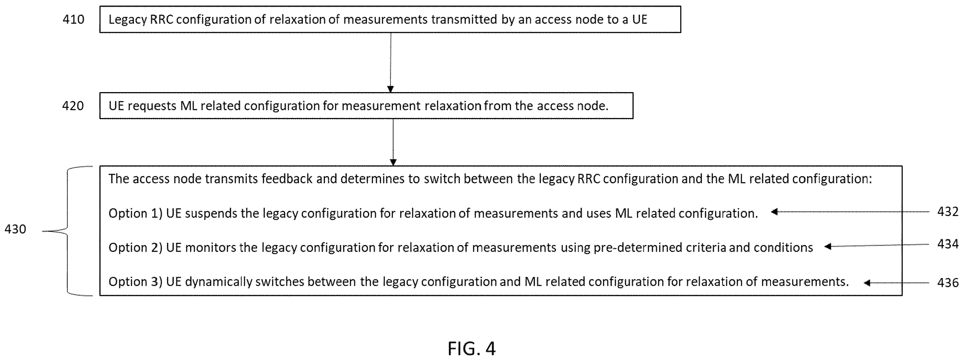

FIG. 4 illustrates a block diagram according to an example embodiment in which a configuration for measurement relaxation is used at least partly based on ML and may thus be referred to as ML-based configuration for measurement relaxation. The ML-based configuration may be purely based on ML or it may be partly based on ML. The measurements may be related to mobility, for example RLM or BFD, or RRM or a combination thereof. In this example embodiment, messages related to the confirmation for the measurement relaxation comprises at least the following:

- ML prediction model related parameters and settings regarding the configuration.
- The methodologies or post-processing algorithms to derive the ML-based relaxation parameters, i.e., scaling factor, from the prediction model.
- The length of evaluation period $T_{eval}^{ML}$ for ML-based relaxation configuration for measurement relaxation.
- The set of evaluation conditions for executing ML-based configuration for measurement relaxation.
- The parameters for the ML-based measurement relaxation status reporting.

In the example embodiment of FIG. 4, in block 410, an access node, such as a gNB, transmits an RRC configuration regarding measurement relaxation to a UE. The RRC configuration may be considered as a legacy RRC configuration that comprises hardcoded rules for measurement relaxation. Then, in block 420, the UE transmits to the access node a request for ML-related configuration for measurement relaxation. ML-related configuration is thus a configuration that uses ML, at least partly, for determining relaxation for the measurements. Then, in block 430 the access node transmits feedback to the UE and there are three different methods options, which may also be referred to as methods, regarding the determination the access node may determine to be applicable regarding switching between the legacy RRC configuration and the ML related configuration. The first option is that the UE suspends the legacy configuration for relaxation of measurement and uses ML related configuration instead. The second option is that the UE monitors the legacy configuration for relaxation of measurements using pre-determined criteria and conditions thereby using the ML-related configuration for measurement relaxation only partly. The third option is the UE dynamically switches between the legacy configuration and ML related configuration for relaxation of measurements. It is to be noted that the first and the second option may both require specific RRC signaling elements (RRC and/or MAC CE) and specific UE configuration structures. It is also to be noted that the network, for example the access node alone or in combination with other network elements, may enforce the transition between the first and the third option. The first option also may allow faster response compared to the second option but may be less conservative in terms of network control.

Thus, upon receiving the legacy RRC configuration of measurement relaxation, and thereby also parameters regarding the configuration, at the UE, the measurements comprising for example RLM/BFD and/or RRM measurements, the UE may request the new configuration, and its related parameters, for performing ML-based procedures. The requested configuration is transmitted from the access node to the UE. The access node thus determines how to apply the ML-based solutions on top of the legacy configuration as described above. The access node may also determine ML prediction model related parameters and settings as well as methodologies or post-processing algorithms to derive the ML-based measurement relaxation parameters from the prediction model. For example, with the first option heuristic algorithms may be applied to the output of the prediction model to derive the relaxation scaling factor K based on the statistics (e.g., mean, or variance, or a combination of both) of the predicted measurement samples from serving and neighboring cells or beams. As another example, with the second option, a new variable or multiplier $\alpha$ may be introduced to scale the relaxation scaling factor, i.e., $\alpha \times$ K, determined by the access node, according to the prediction outcome. If $\alpha >$ 1, then the UE is enabled to perform the more aggressive relaxation, otherwise, if $0 < \alpha <$ 1, then the UE is enabled to perform the more conservative relaxation. As a further example, with the third option, without change of the legacy rule, both above two options may be considered as candidates for ML-based solution.

The access node may also determine the length of an evaluation period $T_{eval}^{ML}$ for ML-based relaxation condition. For example, the purpose of configuring this evaluation period may be to collect the ground truth samples to verify the model reliability, to collect measurement samples to verify the UE stability for relaxation, to generate the use case specific reference KPIs for analysis, etc. The length of the evaluation period may depend on different stated options and embodiments, and the evaluation window length may be set differently. For example, for the first option, the evaluation period length $T_{eval}^{ML}$ can be set statically as a function of mobility scenarios, such as speed, HO interruption time, time of staying in a cell, or beam, and/or can be adjusted dynamically according to the evaluation outcome. As another example, for the second option, it may be possible to reuse the legacy settings for $T_{eval}^{ML} = T_{\text{Evaluate\_out\_SSB\_Relax}}$, which is defined as a function of SSB periodicity and DRX cycle. Then as a further example, for the third option, without change of the legacy rule, both above two options can be considered as candidates for ML-based solution.

The access node may also determine a set of evaluation conditions for applying ML-based measurement relaxation. For example, the following list of potential constraints can be considered with the associated thresholds, offsets and acceptance ratio, etc.

- Model reliability. Model reliability may be defined as a probabilistic measure that quantifies prediction accuracy, model confidence, etc. A set of parameters including, for example, reliability threshold, offset $\{\gamma_M, o_M\}$, may be configured by the access node for the UE to evaluate its ML model performance.
- Radio link quality. This may be defined by reusing the legacy measures, e.g., SINR, RSRP, reference signal received quality (RSRQ), etc., for evaluating the radio link quality. A set of parameters including reliability threshold, offset $\{\gamma_R, o_R\}$, may be configured by the access node for the UE to evaluate its radio link quality.
- Mobility specific performance. This may be defined by including one or more mobility related KPIs, e.g., percentage of RLF and HOF, outage probability, amount of unnecessary handovers, etc. A set of parameters including reliability threshold, offset $\{\gamma_{Mob}, o_{Mob}\}$, may be configured by the access node for the UE to evaluate its mobility specific performance.

It is to be noted that depending on the desired use case, other conditions such as model complexity, exploration convergence, variation or stability of throughput or spectral efficiency, etc., may also be considered as a generalization.

The access node may also determine the parameters for the ML-based measurement relaxation status reporting. The status may be enter, which corresponds to applying the ML-based measurement relaxation, or exit, which corresponds to not applying the ML-based measurement relaxation. Such parameter may include for example:

- Periodicity (in ms) for reporting or a timer. Alternatively, multiple values for reporting periodicity may be configured for the UE.
- Signal format may also be defined according to the outcome of the evaluation conditions. For example, when the number of the associated evaluation conditions is $n$, the generated indication signal should be with $n$-bits. For each digit, if the evaluation qualifies, simply 1 will be generated, otherwise 0, for example.

It is also to be noted that the initial parameters or default settings of the above discussed configurations may be set according to the legacy RRC configuration of measurement relaxation parameters. Thus, with the configuration messages sent by the access node, the UE may perform the ML-based measurement relaxation procedure.

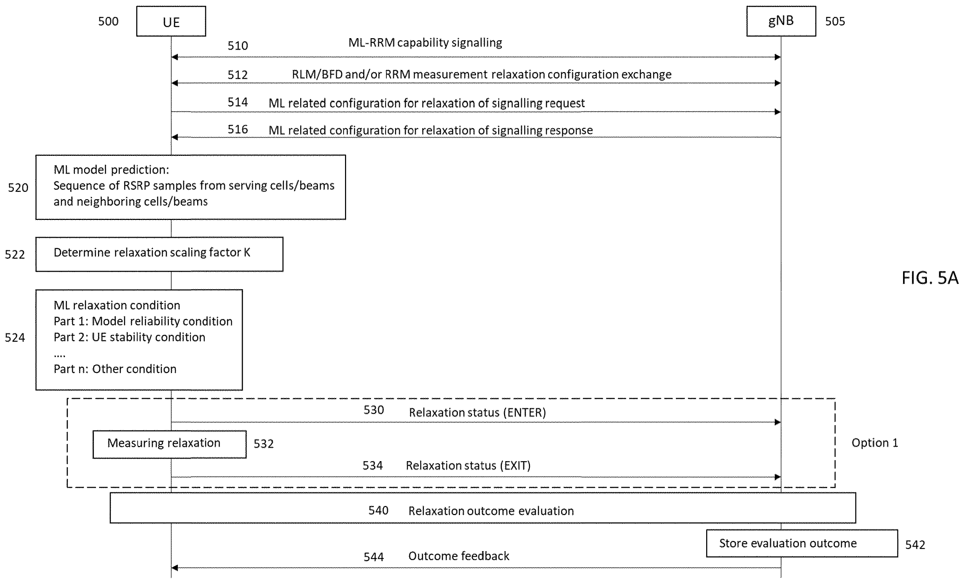

FIG. 5A is an example embodiment that illustrates a signalling chart according to an example option. In this example embodiment, the signalling between a UE 500 and a gNB 505 is illustrated. It is to be noted that the access node may be any other suitable access node than gNB as well. In this example embodiment, first, the UE 500 exchanges with the gNB 505 capability related signalling 510 and 512 using RRC configuration or reconfiguration signalling. The signalling 510 is for the UE 500 to request from the gNB 505 ML-based functionalities to support a target use case that in this example embodiment is the LTM. The signalling 512 is for the gNB 505 to define RRC (re)configuration of legacy measurement relaxation configuration and its related parameters. Measurements may be related to mobility, such as RLM or BFD, or to RRM, or a combination thereof.

Next, the UE 500 may request one or more signaling configurations from the gNB 505 to be used for the execution of one or more ML-based measurement relaxation related procedures. This may be performed by the UE 500 by transmitting, to the gNB 505, signaling 514 that is for requesting ML-related configuration for relaxation of signaling request. The gNB 505 may then transmit the response using signaling 516. The requested configuration signaling message may comprise for example one or more the following:

- Configuration parameters such as selection of operation mode with respect to the legacy hardcoded method, methodologies to derive a relaxation scaling factor, ML-based relaxation evaluation period or time window, ML-based relaxation evaluation conditions and criteria, ML-based relaxation status reporting parameters, status prohibit timers, etc.
- Optionally, if the UE 500 comprises ML-based functionalities, ML model ID or ML-related algorithm ID for using ML model prediction.
- The signalling channel to be used, or protocol layer to be used e.g. RRC or MAC may be selected depending on the time constrains of the prediction window update and optimization related evaluation execution, data collection, and feedback indication, etc.

The gNB 505 thus transmits, using signaling 514, configurations to be used for performing one or more ML-based measurement relaxations requested by the UE 500. Therefore, the gNB 505 may control or enforce the transition between ML-based solution and the legacy rule, or dynamic switching between different embodiments. For example, the option 1 discussed in the context of example embodiment of FIG. 4 may be enabled and an ML-based solution may fully replace the legacy rules. The configuration message determined in by the gNB 505 is transmitted to the UE 500 for follow-up ML-based measurement relaxation related procedures. Depending on the number of the evaluation conditions (n-bits), the signal format of the relaxation status report may also be defined. The same signaling channel or protocol layer, e.g., RRC or MAC, may be used as in the context of requesting ML-related configuration for relaxation of measurements.

The UE 500 performs, in block 520, the ML inference to output a sequence of prediction samples, e.g.,

serving and neighboring beams, or cells, RSRP, in a future time window. In other words, the UE obtains prediction results from the ML model. In this example embodiment, a time series prediction model, e.g., recurrent neural network (RNN) or long short-term memory (LSTM) neural network, is hosted and executed at the UE side. Also, feature extraction and analysis from the prediction window may be performed for example as follows:

1) collect top $N$ RSRP statistics including both serving and neighboring cells, or beams,
2) collect and calculate the average prediction accuracy with respect to each prediction sample in a given prediction window, and
3) analyze the potential HO execution time instances, etc.

Then, in block 522, the UE 500 may determine the exact value of the relaxation scaling factor $K$ based on the prediction results obtained from the block 520. For the first option, various heuristic methods may be applied to map the different values of $K$ to the output statistics of the prediction samples. As an implementation example, one can map different scalar values of the configured $K$ as a function of the mean or variance of predicted serving cell, or beam, RSRPs in a prediction window.

Next, in block 524, the UE 500 monitors and evaluates one or more ML-based measurement relaxation conditions, individually or jointly, within a pre-configured evaluation period $T_{eval}^{ML}$. Below are some examples of relaxations conditions the UE 500 may monitor and evaluate:

- Model reliability: This measure may be denoted as $f_M$, which can be defined as prediction accuracy within $T_{eval}^{ML}$, $f_M = \dfrac{\text{Correct prediction}}{\text{Ground truth}}$. The condition is verified if $f_M + o_M \geq \gamma_M$.
- Radio link quality: This measure may be denoted as $f_R$, which can be defined as average measured SINR within $T_{eval}^{ML}$. The condition is verified if $f_R + o_R \geq \gamma_R$.
- Mobility specific performance: This measure may be denoted as $f_{mob}$, which can be defined as the outage probability within $T_{eval}^{ML}$, $f_{mob} = \dfrac{\text{Time of outage}}{T_{eval}^{ML}}$. The condition is verified if $f_{Mob} + o_{Mob} \geq \gamma_{Mob}$.
- Other constraints may originate from UE capabilities and may also be evaluated.
- The evaluation outcome may be integrated as a compound $n$-bits information for status reporting.

The UE 500 then reports to the gNB 500, using signalling 530, when it determines a status that corresponds to entering the measurement relaxation. The status may be determined based on observing that the prediction results obtained from the ML model correspond to a possibility to use ML-based measurement relaxation, in other words, the prediction results correspond to the criteria set in the configuration for using ML-based measurement relaxation. The reporting periodicity or timer in ms is configured to the UE at by the gNB with the signaling 516. The value may be related to the mobility profile and use case. Also, signal format may be defined as the sequence of bitstring is generated according to the evaluation outcome at the block 524. For example, if all the evaluation conditions are verified, the resulting bitstring may be 111 if the number of conditions $n = 3$, which would lead to enter the relaxation mode. It is worth noting that the signaling 530 may be an extension of the legacy UE assistance information for measurement relaxation status reporting. Alternatively, depending on the timing constraints, it may also be conveyed via the independent L1/L2 signaling channel, such as MAC CE.

Then in block 532, the UE 500 applies the ML-based measurement relaxation. The relaxation scaling factor $K$ is determined at the block 522. In other words, this value is determined by the ML prediction model, which is independent of the one from the legacy rule.

The UE 500 reports to the gNB 505 to exit the status of ML-based measurement relaxation using signaling 534. Status reporting periodicity or timer in ms is configured to the UE at by the gNB 505 using the signaling 516. The value may be related to the mobility profile and use case. Also, signal format may be defined as the sequence of bitstring generated according to the evaluation outcome at the block 524. For example, if all the evaluation conditions are failed, the resulting bitstring would be 000 if number of conditions $n = 3$, which would lead to exit the relaxation mode. It is worth noting that the signaling 534 may be an extension of the legacy UE assistance information for measurement relaxation status reporting. Alternatively, depending on the timing constraints, it can also be conveyed via the independent L1/L2 signaling channel, such as MAC CE.

The signaling 530, block 532 and signaling 534 correspond to the first option that was discussed in the example embodiment of FIG. 4.

The UE 500 and the gNB 505 perform the outcome evaluation of ML-based measurement relaxation in block 540. This may be understood as postprocessing and assessment steps for both the gNB 505 and the UE 500. The performance evaluation may be performed by the UE 500 by determining mobility performance, such as percentage of HOF/RLF, number of unnecessary HOs, outage, etc. Alternatively, or additionally, the performance evaluation may be performed by the gNB 505 alone or in combination with other network elements by determining system-level performance), such as cell throughput, spectral efficiency, etc. Thus, it may be estimated whether the performance enhancement is achieved or degradation is detected with respect to the desired optimization target.

Optionally, the gNB 505 may store the evaluation outcome of the current relaxation procedure as illustrated in block 542. This may enable the gNB 505 to assess whether current approach is beneficial to continue or revert back to the legacy rule. Also optionally, the outcome feedback may be transmitted from the gNB 505 to UE 500 using signaling 544. It may be up to the network to decide whether current configuration is still valid for performing the prediction from block 520 or if RRC reconfiguration is needed.

It is to be noted that the implementation of the first option as described above may be implemented in various manners. As one example, as stated above, the evaluation of ML-based measurement relaxation conditions may be performed in separate steps by the UE 500. For example, the UE 500 may first evaluate the radio related conditions such as UE stability and mobility performance, to decide whether to apply ML-based solution or the legacy method. If yes, the UE 500 may perform the ML-based procedures described in block 520 and 522 to derive the relaxation scaling factor. Otherwise, it falls back to the legacy method. Additionally, the UE 500 may evaluate the ML reliability conditions to determine whether the ML-based solution is sufficient. If yes, the UE 500 may perform the follow-up procedures from signaling 530 to block 540. Otherwise, the UE 500 may fall back to the legacy method. This example also provides an additional constraint to apply and discard the ML-based solutions for if the third option discussed in the context of the example embodiment of FIG. 4.

As another example of various implementations, one of the evaluation outcomes in block 540 may be such that the gNB 505 may determine to update the length of the evaluation period $T_{eval}^{ML}$ . As a further example of various implementations, the outcome of the block 540 may cause the gNB 505 to determine to update the status reporting periodicity or timer.

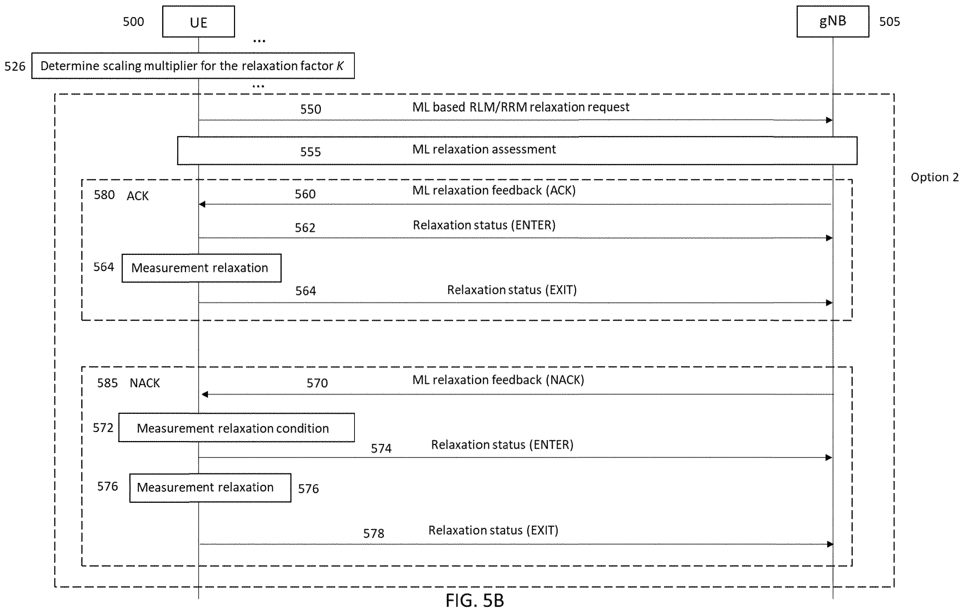

FIG. 5B is another example embodiment that illustrates another signalling chart according to another example option, which is a variation to the example option described in the context of FIG. 5A. In this example embodiment, the second option discussed in the context of the example embodiment of FIG. 4 is applicable. Thus, the signalling in this example embodiment takes place between the UE 500 and the gNB 505. The signalling 510, 512, 514 and 516 occurs also in this example embodiment, as well as block 520, although not illustrated in the FIG. 5B. It is to be noted though that in this example embodiment gNB 505 may control or enforce the transition between ML-based solution and the legacy configuration, or allow dynamic switching between different embodiments. Also, the ML-based solution is configured to monitor the legacy hardcoded scaling factor $K$. Further, instead of block 522, in this example embodiment there is block 526, in which the UE 500 determines the multiplier $\alpha$ to monitor the legacy relaxation scaling factor $K$ based on the prediction results from the block 520. The resulting relaxation scaling factor is $\alpha \times K$. In this example embodiment, various heuristic methods may be applied to map the different values of $\alpha$ to the output statistics of the prediction samples. As an implementation example, if $\alpha > 1$ then the UE 500 is enabled to perform the more aggressive relaxation when serving cell/beam signal shows higher stability, otherwise, if $0 < \alpha < 1$, then the UE is enabled to perform the more conservative relaxation when serving cell, or beam, signal shows lower stability or HO is likely triggered.

Although not illustrated, the UE 500 performs the block 524 as illustrated in the example embodiment of FIG. 5A. Then, the UE 500 transmits the ML-based measurement relaxation request using signaling 550 to the gNB 505 when the evaluation phase is completed. The signaling 550 allows overall signaling and implementation loops to function. In some examples, L1/L2 fast indication may be applied for prediction results.

Then, the UE 500 and the gNB 505 perform the outcome evaluation of ML-based measurement relaxation assessment as illustrated by block 555. Assessment may also be understood as evaluation. In this example embodiment, the performance evaluation can be conducted at the UE-side as mobility performance evaluation such as percentage of HOF/RLF, amount of unnecessary HOs, outage, etc. Additionally, or alternatively, the performance evaluation may be performed at the NW-side as a system-level performance evaluation such as cell throughput, spectral efficiency, etc. The performance evaluation may allow to estimate whether the performance enhancement is achieved or degradation is detected with respect to the desired optimization target by applying $\alpha \times K$. According to the evaluation outcome, the gNB 505 then decides whether the UE 500 is granted to perform the ML-based relaxation procedures or whether it is to revert to the legacy configuration. Therefore, the following cases are discussed separately when ACK 580 or NACK 585 is transmitted by the gNB 505.

If the gNB 505 transmits the indication message ACK 560 to the UE to trigger the ML-based measurement relaxation procedure, the UE 500 is allowed to apply the ML-based relaxation that uses partly the ML model to determine the relaxation conditions. For example, L1/L2 fast indication may be applied to trigger the follow-up process. The UE 500 thus transmits, as a response, to the gNB 505 a report to enter the status of ML-based measurement relaxation using signaling 562. Then, in block 564 the UE 500 applies the measurement relaxation. The relaxation scaling factor $K$ may determined at block 526 by applying the multiplier $\alpha$. Then, the UE 500 reports to the gNB 505 to exit the status of ML-based measurement relaxation using signaling 566.

If the gNB 505 transmits the indication message NACK 570 to the UE 500, the UE is to suspend the ML-based measurement relaxation procedure, but trigger to revert back to the legacy configuration. For example, L1/L2 fast indication may be applied to trigger the follow-up process. The UE 500 then performs measurement relaxation procedures according to the legacy configuration. In block 572, the UE 500 monitors the relaxation conditions for example by monitoring the radio link quality and verifies the evaluation conditions. The UE 500 then transmits to the gNB 505 signaling 574 to indicate enter status regarding the measurement relaxation. The UE 500 then performs the measurements relaxation as illustrated in block 576 and upon evaluation, indicate exit status regarding the measurement relaxation to the gNB 505 using signaling 578.

Optionally, the block 540 and signalling 544 may be performed as described in the context of FIG. 5A.

It is to be noted that in the context of the third option, that was discussed in the example embodiment of FIG. 4, dynamic switching between the legacy configuration and ML-related configurations may be achieved from both the first and the second option. In the example embodiment in which the first option is used, the UE 500 may first evaluate the radio related conditions such as UE stability, or mobility performance, or a combination of both, to decide whether to apply ML-based solution or the legacy method. The UE 500 may perform the ML-based procedures from to derive the relaxation scaling factor. Otherwise, it may fall back to the legacy method. The UE 500 may then evaluate the ML reliability conditions to determine whether the ML-based solution is sufficient. If yes, the UE 500 may perform the follow-up procedures. Otherwise, it may fall back to the legacy method.

In the example embodiment in which the first option is used, the dynamic switching between the legacy configuration and ML-based configurations may be done based on the ML relaxation assessment step and the outcome is indicated by ML relaxation feedback ACK or NACK.

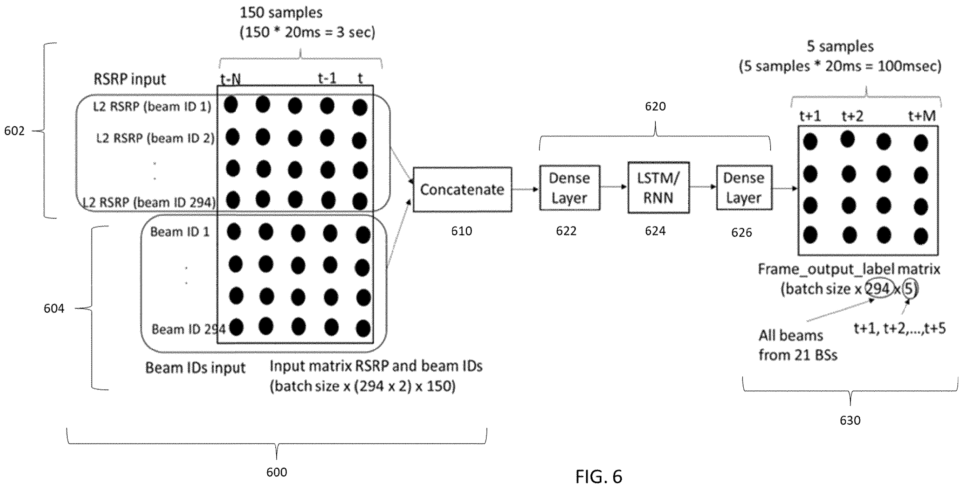

FIG. 6 illustrates an example embodiment of a ML-based model used for performing a sequence, or window, of output in the future time domain. FIG. 6 illustrates an example model structure in which the input frame 600 may be a sequence of L2-RSRP 602 and/or sequence of beam IDs 604 and concatenate 610 these two inputs before feeding into ML model. In this example embodiment, L2-RSRP input values from 294 beams (14 beams from 21 gNBs) are used within 3 second. It is to be noted that gNB measures SSB every 20 ms, the measurement is for 150 samples, and the total input lenngth is 3 second. Furthermore, the input frame 600, i.e., L2-RSRP 602 + Beam IDs 604 and fed into ML model, i.e., long-short-term-memory (LSTM) recurrent neural network (RNN) 624 to obtain time sequence output 630. It is to be noted that there is a dense layer 622 into which the concatenated inputs are provided before passing them on to the LSTM/RNN 624, and then there is also the dense layer 626 after the LSTM/RNN 624. The ML model 620 thus comprises the dense layers 622 and 626 as well as the LSTM/RNN 624. The output 630 of the model may be any of predicted L2-RSRP values, or key markers, e.g., HO indicator metric/predicted HO events within the prediction window. The main benefit of this model is that it allows to deliver an additional information in terms of beam/cell selection on top of the legacy mobility management framework in L1/L2 and/or L3.

It is to be noted that for the first option discussed in the example embodiment of FIG. 4, the mean or sample average of the predicted serving beam or strongest beam RSRP may be denoted as $\mu$ dBm, and $\mu_{min}$, $\mu_{max}$ are the minimum and maximum range of RSRP thresholds to execute the relaxation, and an offset $\Delta$ to scale the range, the postprocessing approach of deriving $K$ can be based on the following equation:

$$K = \begin{cases} 1, & \mu_{min} - 3\Delta \leq \mu \leq \mu_{max} + 3\Delta \\ 2, & \mu_{min} - 2\Delta \leq \mu \leq \mu_{max} + 2\Delta \\ 4, & \mu_{min} - \Delta \leq \mu \leq \mu_{max} + \Delta \\ 8, & \mu_{min} \leq \mu \leq \mu_{max} \end{cases}$$

It is also to be noted that for the second option discussed in the example embodiment of FIG. 4, the mean or sample average of the predicted serving beam or strongest beam RSRP may be denoted as $\mu$ dBm, and $\mu_{min}$, $\mu_{max}$ are the minimum and maximum range of RSRP thresholds to execute the relaxation, and an offset $\Delta$ to scale the range, the postprocessing approach of deriving the multiplier $\alpha$ to scale the hardcoded K can be based on the following equation:

$$\alpha = \begin{cases} 0.01, & \mu_{min} - 3\Delta \leq \mu \leq \mu_{max} + 3\Delta \\ 0.1, & \mu_{min} - 2\Delta \leq \mu \leq \mu_{max} + 2\Delta \\ 1.0, & \mu_{min} - \Delta \leq \mu \leq \mu_{max} + \Delta \\ 2.0, & \mu_{min} \leq \mu \leq \mu_{max} \end{cases}$$

The final determined value for ML-based relaxation scaling factor is $\alpha \times K$.

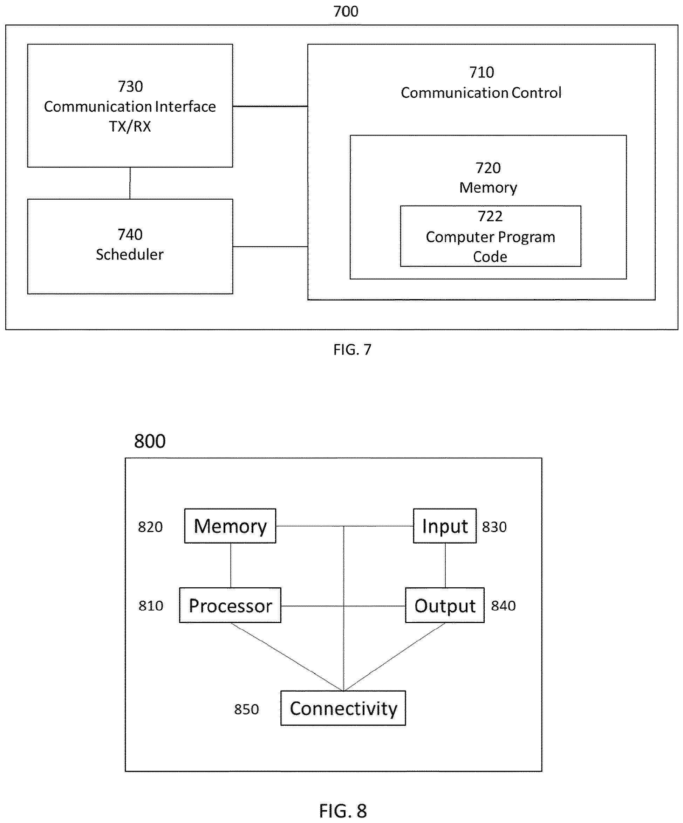

FIG. 7 illustrates an example embodiment of an apparatus that may be an access node or be comprised in an access node such as a gNB. The apparatus may be, for example, a circuitry or a chipset applicable to an access node to realize the described embodiments. The apparatus 700 may be an electronic device comprising one or more electronic circuitries. The apparatus 700 may comprise a communication control circuitry 710 such as at least one processor, and at least one memory 720 including a computer program code (software) 722 wherein the at least one memory and the computer program code (software) 722 are configured, with the at least one processor, to cause the apparatus 700 to carry out any one of the example embodiments of the access node described above.

The memory 720 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 700 may further comprise a communication interface 730 comprising hardware and/or software for realizing communication connectivity according to one or more communication protocols. The communication interface 730 may provide the apparatus with radio communication capabilities to communicate in the cellular communication system. The communication interface may, for example, provide a radio interface to terminal devices. The apparatus 700 may further comprise another interface towards a core network such as the network coordinator apparatus and/or to the access nodes of the cellular communication system. The apparatus 700 may further comprise a scheduler 740 that is configured to allocate resources.

FIG. 8 illustrates an apparatus 800, which may be an apparatus such as, or comprised in, a user equipment, according to an example embodiment. The apparatus 800 comprises a processor 810. The processor 810 interprets computer program instructions and processes data. The processor 810 may comprise one or more programmable processors. The processor 810 may comprise programmable hardware with embedded firmware and may, alternatively or additionally, comprise one or more application specific integrated circuits, ASICs.

The processor 810 is coupled to a memory 820. The processor is configured to read and write data to and from the memory 820. The memory 820 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 820 stores computer readable instructions that are execute by the processor 810. For example, non-volatile memory stores the computer readable instructions and the processor 810 executes the instructions using volatile memory for temporary storage of data and/or instructions.

The computer readable instructions may have been pre-stored to the memory 820 or, alternatively or additionally, they may be received, by the apparatus, via electromagnetic carrier signal and/or may be copied from a physical entity such as computer program product. Execution of the computer readable instructions causes the apparatus 800 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 800 further comprises, or is connected to, an input unit 830. The input unit 830 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 830 may comprise an interface to which external devices may connect to.

The apparatus 800 also comprises an output unit 840. The output unit comprises or is connected to one or more displays capable of rendering visual content such as a light emitting diode, LED, display, a liquid crystal display, LCD and a liquid crystal on silicon, LCoS, display. The output unit 840 further comprises one or more audio outputs. The one or more audio outputs may be for example loudspeakers or a set of headphones.

The apparatus 800 may further comprise a connectivity unit 850. The connectivity unit 850 enables wired and/or wireless connectivity to external networks. The connectivity unit 850 may comprise one or more antennas and one or more receivers that may be integrated to the apparatus 800 or the apparatus 800 may be connected to. The connectivity unit 850 may comprise an integrated circuit or a set of integrated circuits that provide the wireless communication capability for the apparatus 800. Alternatively, the wireless connectivity may be a hardwired application specific integrated circuit, ASIC.

It is to be noted that the apparatus 800 may further comprise various component not illustrated in the FIG. 8. The various components may be hardware component and/or software components.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

**1.** An apparatus comprising:

means for receiving, from an access node, a first configuration that is part of a radio resource control configuration for relaxation of measurements, wherein the first configuration comprises legacy hardcoded rules and measurement relaxation parameters for executing a legacy measurement relaxation procedure;

means for requesting, from the access node, a second configuration that is for executing a machine learning-based measurement relaxation procedure;

means for receiving, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation;

means for obtaining, from a machine learning model, a prediction model regarding the machine learning-based measurement relaxation procedure in accordance with the second configuration;

means for determining measurement relaxation parameters based on the prediction model;

means for monitoring one or more machine learning-based measurement relaxation conditions;

means for determining that the prediction results and the monitored one or more conditions indicate that machine learning-based measurement relaxation can be applied; and

means for transmitting, to the access node, an indication that the status of the measurement relaxation corresponds to enter.

2. An apparatus according to claim 1, wherein the second configuration further comprises indication regarding which of a first, a second and a third method for executing the measurement relaxation procedure to use, wherein

the first method comprises suspending using the first configuration and using purely the second configuration,

the second method comprises using the second configuration and using the first configuration under a pre-defined criteria and conditions, and

the third method comprises dynamically switching between using the first configuration and the second configuration.

3. An apparatus according to claim 1, further comprising:

means for applying the measurement relaxation upon determining that the status of the measurement relaxation is enter: or

means for applying the measurement relaxation upon receiving an acknowledgement from the access node, wherein the acknowledgement is in response to transmitting, to the access node, the indication.

4. An apparatus according to claim 1, 2 or 3, further comprising:

means for determining based on the prediction model that the measurement relaxation is no longer applicable; and

means for transmitting an indication, to the access node, that the status of the measurement relaxation is exit.

5. An apparatus according to claim 4, further comprising:

means for receiving feedback from the access node regarding the machine learning-based measurement relaxation procedure performed by the apparatus.

6. An apparatus according to any previous claim, wherein the relaxation parameters comprise a relaxation scaling factor, that is based on statistics of predicted measurement samples from serving and neighboring cells or beams.

7. An apparatus according to any previous claim, wherein the evaluation conditions comprises one or more of the following: reliability of the machine learning model, quality of radio link, or performance of mobility.

8. An apparatus according to any previous claim, wherein the measurements are regarding mobility, or radio resource management, or a combination of both.

9. An apparatus comprising:

means for providing, to a user equipment, a first configuration that is part of a radio resource control configuration for relaxation measurements, wherein the first configuration comprises legacy hardcoded rules and measurement relaxation parameters for executing a legacy measurement relaxation procedure;

means for receiving a request, from the user equipment, for a second configuration that is for executing a machine learning-based measurement relaxation procedure;

means for providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation; means for receiving, from the user equipment, an indication that the status of the measurement relaxation corresponds to enter.

10. An apparatus according to claim 9, wherein the second configuration further comprises an indication regarding which of a first, a second and a third method for executing the measurement relaxation procedure to use, wherein

the first method comprises suspending using the first configuration and using purely the second configuration,
the second method comprises using the second configuration and using the first configuration under a pre-defined criteria and conditions, and
the third method comprises dynamically switching between using the first configuration and the second configuration.

11. An apparatus according to claim 9 or 10, further comprising:

means for evaluating conditions for entering measurement relaxation by the user equipment; and
means for transmitting, based on the evaluation and to the user equipment, an acknowledgement or a negative acknowledgment regarding entering the measurement relaxation.

12. An apparatus according to claim 9, 10 or 11, further comprising:
means for receiving an indication, from the user equipment, that the status of the measurement relaxation is exit.

13. An apparatus according to any of claims 9 to 12, wherein the evaluation conditions comprise one or more of the following: reliability of the machine learning model, quality of radio link, performance of mobility, or parameters for reporting a status regarding the machine learning-based measurement relaxation.

14. A method comprising:

receiving, from an access node, a first configuration that is part of a radio resource control configuration for relaxation of measurements, wherein the first configuration comprises legacy hardcoded rules and measurement relaxation parameters for executing a legacy measurement relaxation procedure;
requesting, from the access node, a second configuration that is for executing a machine learning-based measurement relaxation procedure;
receiving, from the access node, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation;
obtaining, from a machine learning model, a prediction model regarding the machine learning-based measurement relaxation procedure in accordance with the second configuration;
determining measurement relaxation parameters based on the prediction model;
monitoring one or more machine learning-based measurement relaxation conditions;
determining that the prediction results and the monitored one or more conditions indicate that machine learning-based measurement relaxation can be applied; and
transmitting, to the access node, an indication that the status of the measurement relaxation corresponds to enter.

15. A method comprising:

providing, to a user equipment, a first configuration that is part of a radio resource control configuration for relaxation measurements, wherein the first configuration comprises legacy hardcoded rules and measurement relaxation parameters for executing a legacy measurement relaxation procedure;
receiving a request, from the user equipment, for a second configuration that is for executing a machine learning-based measurement relaxation procedure;
providing, to the user equipment, the second configuration, wherein the second configuration comprises one or more of the following: one or more algorithms for deriving relaxation parameters, a length of an evaluation time period, a set of evaluation conditions that are evaluated based on the evaluation time period, reporting periodicity and signal format for reporting a status of the measurement relaxation;
receiving, from the user equipment, an indication that the status of the measurement relaxation corresponds to enter.

FIG. 1

FIG. 2

FIG. 3A

FIG. 3B

EP 4 465 681 A1

410 | Legacy RRC configuration of relaxation of measurements transmitted by an access node to a UE

420 | UE requests ML related configuration for measurement relaxation from the access node.

430

The access node transmits feedback and determines to switch between the legacy RRC configuration and the ML related configuration:

Option 1) UE suspends the legacy configuration for relaxation of measurements and uses ML related configuration. ◄———— 432

Option 2) UE monitors the legacy configuration for relaxation of measurements using pre-determined criteria and conditions ◄———— 434

Option 3) UE dynamically switches between the legacy configuration and ML related configuration for relaxation of measurements. ◄———— 436

FIG. 4

FIG. 5A

500  UE  ...  gNB  505

526  Determine scaling multiplier for the relaxation factor *K*

...

Option 2

550  ML based RLM/RRM relaxation request

555  ML relaxation assessment

580  ACK
560  ML relaxation feedback (ACK)

562  Relaxation status (ENTER)

564  Measurement relaxation

564  Relaxation status (EXIT)

585  NACK
570  ML relaxation feedback (NACK)

572  Measurement relaxation condition

574  Relaxation status (ENTER)

576  Measurement relaxation  576

578  Relaxation status (EXIT)

FIG. 5B

FIG. 6

700

730
Communication Interface
TX/RX

710
Communication Control

740
Scheduler

720
Memory

722
Computer Program
Code

FIG. 7

800

820 Memory

810 Processor

830 Input

840 Output

850 Connectivity

FIG. 8

Europäisches
Patentamt

European
Patent Office

Office européen
des brevets

# EUROPEAN SEARCH REPORT

Application Number

EP 24 17 0830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/066967 A2 (NOKIA SOLUTIONS & NETWORKS OY [FI]) 27 April 2023 (2023-04-27) | 1,9,14, 15 | INV. H04W24/02 H04W24/10 |
| Y | * abstract * * figures 7-9 * | 3-8, 11-13 | |
| A | * page 29, line 1 - page 36, line 5 * ----- | 2,10 | |
| Y | SUNGHOON JUNG ET AL: "Baseline procedure for ML model lifecycle management", 3GPP DRAFT; R2-2212915; TYPE DISCUSSION; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Toulouse, FR; 20221114 - 20221118 4 November 2022 (2022-11-04), XP052216984, Retrieved from the Internet: URL:https://www.3gpp.org/ftp/TSG_RAN/WG2_R L2/TSGR2_120/Docs/R2-2212915.zip R2-2212915 [AIML] Baseline procedure for ML model lifecycle management_v3.docx [retrieved on 2022-11-04] * paragraph [02.1] * ----- | 3-8, 11-13 | |
| A | US 2023/044727 A1 (PANTELIDOU ANNA [FR] ET AL) 9 February 2023 (2023-02-09) * abstract * * figures 7A, 7B, 8 * * paragraph [0168] - paragraph [0186] * ----- | 1-15 | TECHNICAL FIELDS SEARCHED (IPC) H04W |

The present search report has been drawn up for all claims

| Place of search | Date of completion of the search | Examiner |
|---|---|---|
| Munich | 10 October 2024 | Volpato, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 24 17 0830

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | | Publication date | Patent family member(s) | | Publication date |
|---|---|---|---|---|---|
| WO 2023066967 | A2 | 27-04-2023 | CN | 118202690 A | 14-06-2024 |
| | | | EP | 4420382 A2 | 28-08-2024 |
| | | | WO | 2023066967 A2 | 27-04-2023 |
| US 2023044727 | A1 | 09-02-2023 | EP | 4132059 A1 | 08-02-2023 |
| | | | US | 2023044727 A1 | 09-02-2023 |

EPO FORM P0459

For more details about this annex : see Official Journal of the European Patent Office, No. 12/82